# EUROPÄISCHE PATENTSCHRIFT

(11) **EP 4 059 125 B1**
(45) Veröffentlichungstag und Bekanntmachung des Hinweises auf die Patenterteilung: **25.09.2024**
(21) Anmeldenummer: 20819634.5
(22) Anmeldetag: 12.11.2020
(51) Int. Cl.: H02K 15/00

(54) **VERFAHREN ZUM UMFORMEN EINES IN EINEM STATORKERN ANGEORDNETEN LEITERSTÜCKS SOWIE ENTSPRECHENDE VORRICHTUNG**
METHOD FOR SHAPING A CONDUCTOR PIECE ARRANGED IN A STATOR CORE AND CORRESPONDING DEVICE
PROCÉDÉ POUR METTRE EN FORME UNE PIÈCE CONDUCTRICE PLACÉE DANS UN NOYAU STATORIQUE AINSI QUE DISPOSITIF CORRESPONDANT

(30) Priorität: 12.11.2019 DE 102019130535
(43) Veröffentlichungstag der Anmeldung: 21.09.2022
(73) Patentinhaber: Gehring Technologies GmbH + Co. KG, 73760 Ostfildern (DE)
(72) Erfinder: BÄDER, Christoph, 73776 Altbach (DE)
(74) Vertreter: DREISS Patentanwälte PartG mbB
(86) Internationale Anmeldenummer: PCT/EP2020/081880
(87) Internationale Veröffentlichungsnummer: WO 2021/094438

(56) Entgegenhaltungen:
- JP-A- 2012 175 748
- JP-A- 2016 131 424
- JP-A- 2016 131 425

## Beschreibung

Die Erfindung betrifft eine Vorrichtung zur Umformung eines in einem Statorkern angeordneten Leiterstücks, sowie ein entsprechendes Verfahren.

JP 2016 131425 A, JP 2012 175748 A und WO 2019/104362 A1 beschreiben jeweils Vorrichtungen zum Umformen eines oder mehrerer in einem Statorkern angeordneter Leiterstücke mit einzelnen Merkmalen der unabhängigen Ansprüche, jedoch beruhen sie auf anderen Mechanismen als die vorliegende Erfindung.

Bei der sogenannten Hairpin-Technologie werden im weitesten Sinne haarnadelförmige Leiterstücke (Hairpins) zusammen mit einzelnen andersartigen Sonderpins in einen Statorkern eingesetzt. Hairpins sind dabei Leiterstücke mit im Wesentlichen zwei länglich erstreckten Schenkeln und einem diese beiden Schenkel verbindenden Verbindungsabschnitt. Die Vielzahl an Leiterstücken ist dabei üblicherweise derart angeordnet, dass die Leiterstücke auf mehreren in einer Umfangsrichtung verlaufenden Kreisbahnen in Reihen, die jeweils in einer Radialrichtung erstreckt sind, angeordnet sind. Dabei ragen die freien Enden der Schenkel auf einer Seite des Statorkerns aus diesem hinaus und die Verbindungsabschnitte sind auf der anderen Seite des Statorkerns angeordnet.

Nach dem Einsetzen werden die freien Enden in Umfangsrichtung verdreht bzw. verbogen, wobei dieser Schritt auch als "Twisten" bezeichnet wird. Dabei werden einzelne Hairpins (allgemein Leiterstücke bzw. deren freie Enden) im Uhrzeigersinn und andere gegen den Uhrzeigersinn in Umfangsrichtung verdreht. Typischerweise werden die Hairpins derart verdreht, dass sie nach dem Verdrehen in einer direkt benachbarten Reihe oder einer übernächsten Reihe angeordnet sind (denkbar ist auch, dass weitere Reihen übersprungen werden). Das Twisten wird beispielsweise mittels konzentrisch zueinander angeordneten Zylindern, die rotierbar sind, durchgeführt, wobei jeweils Leiterstücke, die auf einer Kreisbahn angeordnet sind, in einem Zylinder in entsprechenden Aufnahmen aufgenommen sind. Das Verdrehen der Zylinder zueinander verbiegt die Leiterstücke auf benachbarten Kreisbahnen in unterschiedliche Richtungen.

Vor dem Twisten kann es gewünscht sein die Hairpins radial auswärts zu biegen. Mit diesem Umformschritt befasst sich die vorliegende Erfindung und stellt eine Vorrichtung sowie ein Verfahren zum entsprechenden Umformen insbesondere der radial äußeren Hairpins bereit.

Im Anschluss an das Twisten werden die Hairpins üblicherweise abgelängt (auf eine vorgesehene Länge gekürzt) und anschließend bestimmte Hairpins/Leiterstücke bzw. deren freie Enden miteinander verschweißt, um so die Wicklungen des Stators zu bilden. Um die Hairpins zu kürzen und für den Verschweißvorgang zu Maskieren (hierdurch wird verhindert, dass heißes Material in den Stator gelangt), wird häufig eine plattenartige Abdeckung mit Ausnehmungen auf die freien Enden aufgesetzt, so dass die freien Enden in den Ausnehmungen angeordnet sind. Beim Ablängen werden dann mittels eines Hobels die über die Abdeckung hinausstehenden freien Enden abgetrennt. Andere Arten des Ablängens können vorgesehen sein.

Es ist Aufgabe der vorliegenden Erfindung, eine Vorrichtung und ein Verfahren zur Verfügung zu stellen, mit denen das dem Twisten vorangehende Umformen von Leiterstücken in einem Statorkern möglichst schnell und präzise durchgeführt werden kann.

Gelöst wird die Aufgabe durch eine Vorrichtung zum Umformen eines oder mehrerer in einem Statorkern angeordneten Leiterstücke, insbesondere Hairpins nach Anspruch 1, wobei die Vorrichtung umfasst:
Eine Aufnahme zum Aufnehmen eines Statorkerns. In dem Statorkern ist eine Vielzahl an Leiterstücken angeordnet. Diese sind typischerweise in einer Umfangsrichtung in Reihen angeordnet. Jede Reihe erstreckt sich in einer Radialrichtung. Der Statorkern befindet sich in der Aufnahme in einer Bearbeitungsposition. Dabei befinden sich die umzuformenden Leiterstücke in einer Ausgangskonfiguration. In der Ausgangskonfiguration, also noch vor dem Umformen, ragen die Leiterstücke aus dem Statorkern entlang einer Längsrichtung erstreckt heraus. Die Umformung erfolgt dabei an den aus dem Statorkern herausragenden freien Enden der Leiterstücke.

Die Leiterstücke haben insbesondere einen rechteckigen Leiterquerschnitt, wobei die Ecken des Querschnitts abgerundet sein können. Des Weiteren weisen die Leiterstücke typischerweise eine elektrische Isolierung auf.

Die Vorrichtung umfasst weiter eine Umformeinheit, die einen Greifer umfasst. Dieser ist ausgebildet, um die umzuformenden Leiterstücke (bzw. das im jeweiligen Umformvorgang umzuformende Leiterstück) lösbar klemmend zwischen mindestens zwei Klemmelementen zu erfassen.

Der Greifer kann entlang einer Greiferlängsrichtung gegenüber der Aufnahme bzw. dem darin aufgenommenen Stator verfahren werden (bzw. zur Aufnahme bzw. dem darin aufgenommenen Stator hin und davon weg). Die Greiferlängsrichtung verläuft in einem Ausgangszustand des Greifers (zu Beginn des Umformvorgangs) parallel zur Längsrichtung. Der Greifer kann innerhalb einer durch die Längsrichtung und die Radialrichtung aufgespannten Ebene gegenüber der Aufnahme bzw. dem darin aufgenommenen Stator verschwenkt werden. Im verschwenkten Zustand ist die Greiferlängsrichtung gegenüber der Längsrichtung geneigt.

Die Vorrichtung kann eine Gegenlagereinrichtung umfassen. Diese kann mit einem Gegenlagerabschnitt an ein Leiterstück angelegt werden. Durch das Anlegen des Gegenlagerabschnitts wird ein erster Biegepunkt definiert.

Der erste Biegepunkt kann aber auch durch eine Kante definiert werden, die durch den Statorkern selbst, bzw. durch die den freien Enden der Leiterstücke zugewandten Seite des Statorkerns, gebildet wird, so dass der erste Biegepunkt sich in einem unmittelbar an den Statorkern angrenzenden Bereich des Leiterstücks befindet. Die Kante kann abgerundet sein, um beispielsweise eine Beschädigung des Leiterstücks und/oder der Isolierung des Leiterstücks zu vermeiden. Es ist ebenso denkbar, die Kante, die den ersten Biegepunkt definiert, durch einen Einsatz, z. B. Plastikeinsatz, im Stator und/oder eine Maske, z. B. eine Plastikmaske, zum Auflegen auf den Stator zu realisieren.

Die Umformeinheit kann weiter eine Halterung umfassen. Die Halterung dient zur Befestigung des Greifers. Es können auch andere Elemente an der Halterung angeordnet und/oder befestigt sein.

Die Umformeinheit kann einen Aktuator aufweisen. Dieser ist bevorzugt in Form eines Druck-, Hydraulik- oder Pneumatikzylinders ausgeführt. Es ist aber auch ein Aktuator denkbar, der auf einem anderen Prinzip, wie z. B. elektrisch, magnetisch, elektromechanisch, etc., basiert. Der Aktuator kann den Greifer in einem Bewegungsmodus in Greiferlängsrichtung translatorisch bewegen. Er kann in einen Festmodus geschaltet werden, indem er den Greifer entlang der Greiferlängsrichtung fixiert, so dass der Greifer sich nicht entlang der Greiferlängsrichtung translatorisch bewegen kann. Er kann aber auch in einen Freigangsmodus geschaltet werden, in dem der Greifer frei entlang der Greiferlängsrichtung translatorisch bewegbar ist. Mit anderen Worten, der Greifer kann quasi mechanisch vom Aktuator abgekoppelt werden, sodass der Greifer entlang der Greiferlängsrichtung sich frei bewegen kann und dass der Aktuator in diesen translatorischen Bewegungsprozess des Greifers nicht eingreift (bspw. kann ein Druckzylinder drucklos geschaltet sein, so dass ein entsprechender Kolben sich frei in einem entsprechenden Zylinder bewegen kann). Der Aktuator kann an der Halterung befestigt sein. Es kann insbesondere vorgesehen sein, dass der Aktuator den Greifer gegenüber der Halterung bewegen kann (Relativbewegung zwischen Greifer und Halterung). Typischerweise ist der Greifer schwenkbar mit dem Aktuator verbunden.

Des Weiteren kann die Umformeinheit zwei Schwenkeinrichtungen umfassen. Jede der beiden Schwenkeinrichtungen ist derart angeordnet und ausgebildet, dass damit der Greifer und/oder die Halterung jeweils auf einer Kreisbahn um einen jeweiligen Schwenkpunkt geschwenkt werden kann. Dabei kann mindestens eine Schwenkeinrichtung zum Verschwenken der Halterung vorgesehen sein. Dadurch, dass der Greifer an der Halterung angeordnet ist, wird dieser ebenfalls beim Verschwenken der Halterung mit verschwenkt. Eine solche Schwenkeinrichtung muss daher nicht direkt am Greifer befestigt werden, sondern ist an der Halterung befestigt. Damit werden entsprechende Befestigungsmittel zur Befestigung der Schwenkeinrichtung am Greifer unnötig. Dies führt zu einer kompakteren Bauweise des Greifers.

Es kann insbesondere vorgesehen sein, dass die Umformeinheit eine erste Schwenkeinrichtung umfasst, die angeordnet und ausgebildet ist, um den Greifer bzw. die Halterung auf einer Kreisbahn um einen Schwenkpunkt zu schwenken. Insbesondere kann vorgesehen sein, dass die erste Schwenkeinrichtung die Halterung und den Greifer gemeinsam schwenken kann. Die erste Schwenkeinrichtung kann hierzu an der Halterung angelenkt sein und die Halterung kann mittels der ersten Schwenkeinrichtung gemeinsam mit dem an ihr angeordneten Greifer schwenkbar sein.

Es kann insbesondere vorgesehen sein, dass die Umformeinheit eine zweite Schwenkeinrichtung umfasst, die angeordnet und ausgebildet ist, um den Greifer auf einer Kreisbahn um einen zweiten Schwenkpunkt zu schwenken. Insbesondere kann vorgesehen sein, dass die zweite Schwenkeinrichtung eine Relativbewegung zwischen der Halterung und dem Greifer bewirken kann. Die zweite Schwenkeinrichtung kann hierzu an der Halterung und an dem Greifer angelenkt und den Greifer gegenüber der Halterung schwenken. Der zweite Schwenkpunkt des Greifers kann ein Anlenkpunkt am Greifer des Aktuators zur Bewegung des Greifers entlang der Greiferlängsrichtung sein.

Die erste Schwenkeinrichtung kann als Linearaktuator ausgebildet sein. Sie kann mit einem Ende des Linearaktuators schwenkbar an der Umformeinheit bzw. deren Halterung angelenkt sein und mit einem anderen Ende des Linearaktuators außerhalb der Umformeinheit an der Vorrichtung angelenkt sein, so dass sie die Umformeinheit bzw. deren Halterung schwenken kann.

Die Umformeinheit bzw. deren Halterung ist hierzu typischerweise schwenkbar in der Vorrichtung befestigt. Insbesondere schwenkbar an einer Basis, an der auch die Aufnahme angeordnet ist, befestigt.

Die zweite Schwenkeinrichtung kann als Linearaktuator ausgebildet sein. Der Greifer kann schwenkbar in der Umformeinheit bzw. an der Halterung gelagert sein. Die zweite Schwenkeinrichtung kann an der Halterung und dem Greifer angelenkt sein, so dass sie die den Greifer gegenüber der Halterung schwenken kann.

Es kann vorgesehen sein, dass der Aktuator und mindestens eine Schwenkeinrichtung, insbesondere beide (die erste und die zweite) Schwenkeinrichtungen, im Wesentlichen in einer Ebene angeordnet sind. Eine solche Anordnung führt zu einer kompakten und insbesondere schmalen Bauweise der Umformeinheit. Insbesondere können mehrere Umformeinheiten platzsparend radial um einen Statorkern herum angeordnet werden.

Die Klemmelemente sind insbesondere in einer zur Greiferlängsrichtung orthogonalen Klemmrichtung zueinander bewegbar. Dadurch wird der Klemmvorgang durchgeführt. Die Klemmelemente können beispielsweise mittels eines Aktuators, der am Greifer oder an der Halterung befestigt ist, bewegt werden.

Es kann vorgesehen sein, dass die Klemmelemente als Klemmbacken ausgeführt sind, die sich länglich entlang der Greiferlängsrichtung erstrecken. Es können zwei oder mehr Klemmbacken vorgesehen sein.

Des Weiteren kann die Gegenlagereinrichtung einen Gegenlagerabschnitt aufweisen, der an das Leiterstück angelegt wird und damit einen ersten Biegepunkt definiert. Dabei vollzieht die Gegenlagereinrichtung eine radial einwärts gerichtete Bewegung gegenüber dem Stator. Hierzu kann die Vorrichtung eine entsprechende Lagerung der Gegenlagereinrichtung aufweisen.

Bevorzugt ist der Gegenlagerabschnitt derart angeordnet ausgebildet, dass dieser unmittelbar an den Statorkern angrenzenden Bereich des Leiterstücks an dieses anlegebar ist.

Somit ist eine Biegung des freien aus dem Statorkern herausragenden Endes des Leiterstücks in unmittelbarer Nähe zum Statorkern möglich. Hierdurch ist ein insbesondere in Längsrichtung kompakter getwisteter Bereich der Leiterstücke realisierbar und damit eine insgesamt kompaktere Bauweise des Stators möglich.

Der Gegenlagerabschnitt ist insbesondere zumindest teilweise abgerundet ausgestaltet. Durch die abgerundete Form des Gegenlagerabschnitts werden Beschädigungen des Leiterstücks und oder der Isolierung des Leiterstücks vermieden. Durch die Größe des Gegenlagerabschnitts kann des Weiteren die Biegung geometrisch definiert werden. Der Radius der Biegung entspricht dem Radius der abgerundeten Form des Gegenlagerabschnitts und kann somit mit der Größe der abgerundeten Form des Gegenlagerabschnitts gezielt variiert werden.

Die eingangs genannte Aufgabe wird ferner durch das beanspruchte Verfahren zum Umformen eines oder mehrerer in einem Statorkern angeordneter Leiterstücke, insbesondere Hairpins, nach Anspruch 10 gelöst, wobei das Verfahren die folgenden Schritte umfasst:
Bewegen eines Greifers entlang einer Längsrichtung in eine Greifposition und klemmendes Greifen des Leiterstücks mittels des Greifers. Die freien aus dem Statorkern herausragenden Enden der im Statorkern angeordneten Leiterstücke erstrecken sich entlang der Längsrichtung.

Insbesondere Anlegen eines Gegenlagerabschnitts an das Leiterstück, um einen ersten Biegepunkt zu definieren. Der erste Biegepunkt kann aber beispielsweise auch durch den Statorkern selbst bzw. dessen an das Leiterstück angrenzende Kante realisiert werden.

Verschwenken des Greifers auf einer Kreisbahn um einen ersten Schwenkpunkt. Der erste Schwenkpunkt des Greifers entspricht auch dem ersten Biegepunkt. Da der Greifer beim Verschwenken das gegriffene Leiterstück mit verschwenkt, wird dieses um den ersten Schwenkpunkt/Biegepunkt gebogen. Der erste Schwenkpunkt des Greifers bzw. Biegepunkt liegt in dem Leiterstück oder unmittelbar an dem Leiterstück.

Insbesondere wird die Verschwenkbewegung des Greifers auf der Kreisbahn durch ein Verschwenken einer Halterung des Greifers um einen Schwenkpunkt der Halterung realisiert. Dieser Schwenkpunkt der Halterung liegt außerhalb des Leiterstücks. Dem Verschwenken der Halterung ist eine translatorische Bewegung des Greifers gegenüber der Halterung überlagert (der Greifer ist gegenüber der Halterung geführt gelagert, so dass er mit einem translatorischen Freiheitsgrad ggü der Halterung bewegbar ist, wobei hierzu ggf. ein Aktuator in einen Freigangmodus geschaltet wird, um die Bewegung frei zu geben). Die translatorische Bewegung des Greifers resultiert aus dem Griff des Leiterstücks sowie der freien translatorischen Beweglichkeit des Greifers gegenüber der Halterung während des Verschwenkvorgangs der Halterung. Mit anderen Worten, durch den Griff des Leiterstücks wird ein fester Radius, eingestellt, mit dem der Greifer um den ersten Biegepunkt geschwenkt wird. Da der erste Biegepunkt/Schwenkpunkt des Greifers nicht mit dem Schwenkpunkt der Halterung zusammenfällt, ergibt sich diese Überlagerung der Bewegungen. Der erste Biegepunkt und der Schwenkpunkt der Halterung sind zueinander beabstandet.

Nachdem das Leiterstück durch das Mitschwenken mit dem Greifer um den ersten Biegepunkt gebogen wurde, kann der klemmende Griff des Greifers gelöst werden und der Greifer entlang der Erstreckung des Leiterstücks in Richtung des ersten Biegepunktes bewegt werden, um erneut das Leiterstück beispielsweise an einer anderen Stelle zu greifen.

Verschwenken des Greifers um einen zweiten Schwenkpunkt. Dieser zweite Schwenkpunkt des Greifers ist beabstandet zu dem Leiterstück angeordnet. Dabei wird eine zweite Biegung des Leiterstücks um einen zweiten Biegepunkt bewirkt. Der zweite Biegepunkt wird durch eine Kante des Greifers definiert. Typischerweise liegt dieser zweite Biegepunkt zwischen dem freien Ende und dem ersten Biegepunkt.

Insbesondere verändert sich die Relativposition zwischen Greifer und Halterung des Greifers während des zweiten Verschwenkvorgangs durch ein Verschwenken des Greifers gegenüber der Halterung.

Das Verschwenken des Greifers kann in diesem zweiten Verschwenkvorgang durch ein Verschwenken des Greifers gegenüber der Halterung erfolgen.

Insbesondere kann der zweite Schwenkpunkt des Greifers ein Anlenkpunkt eines Aktuators sein, der angeordnet und ausgebildet ist, um den Greifer translatorisch relativ zu der Halterung zu bewegen. Insbesondere kann dieser Aktuator im ersten Verschwenkvorgang in einen Freigangsmodus geschaltet gewesen sein und im zweiten Schwenkvorgang in einen Festmodus geschaltet sein.

Bevorzugterweise wird beim Verschwenken um den zweiten Schwenkpunkt des Greifers der zweite Biegepunkt relativ zum Statorkern bewegt. Der zweite Biegepunkt bewegt sich insbesondere radial auswärts und entlang der Längsrichtung zum Statorkern hin. Der zweite Biegepunkt und der zweite Schwenkpunkt des Greifers sind beabstandet zueinander.

Das zu umformende bzw. umgeformte Leiterstück kann das radial äußerste der Leiterstücke einer in Radialrichtung erstreckten Reihe von Leiterstücken sein. Es ist aber auch denkbar, dass es sich dabei um das innerste der Leiterstücke einer in Radialrichtung erstreckten Reihe von Leiterstücken handelt.

Bevorzugterweise liegen der erste Biegepunkt, der zweite Biegepunkt und der zweite Schwenkpunkt des Greifers in einer Ebene. Bevorzugt wird diese Ebene durch die Längsrichtung und Radialrichtung aufgespannt.

Weiter bevorzugt verlaufen die erste und die zweite Biegung in einer Ebene. Da zwischen den beiden Biegungen des Leiterstücks, das Leiterstück nur gerade Abschnitte aufweist, ist der gesamte aus dem Stator ragende Bereich des Leiterstücks in dieser Ebene angeordnet. Bevorzugt wird diese Ebene ebenfalls durch die Längsrichtung und Radialrichtung aufgespannt.

Die erste und/oder zweite Biegung kann, um einen größeren Winkel gebogen werden, als es gewünscht ist. Mit einem solchen gezielten Überbiegen kann ein Rückfedern des Leiterstücks nach dem Biegen zumindest teilweise ausgeglichen werden. Das Rückfedern wird zwangsläufig durch verschiedene Gegebenheiten bedingt. Diese sind z. B. das Material des Leiterstücks (meist Kupfer), die Dicke des Leiterstücks, die Temperatur, etc.

Es ist daher möglich die einzelnen Leiterstücke derart zu verbiegen und damit aufzuweiten, dass das dem Verbindungsabschnitt abgewandte Ende des Leiterstücks, nach der zweifachen Biegung wieder parallel zur Längsrichtung ausgerichtet ist.

Weitere Merkmale, Einzelheiten und Vorteile der Erfindung ergeben sich aus dem Wortlaut der Ansprüche sowie aus der folgenden Beschreibung der Ausführungsbeispiele anhand der Zeichnungen. Es zeigen:
Fig. 1 eine Seitenansicht einer Umformeinheit und einer Gegenlagereinrichtung einer erfindungsgemäßen Vorrichtung in einem Ausgangszustand;
Fig. 2 eine perspektivische Ansicht der Umformeinheit und der Gegenlagereinrichtung der erfindungsgemäßen Vorrichtung gemäß Figur 1;
Fig. 3 eine Seitenansicht der Umformeinheit und der Gegenlagereinrichtung der erfindungsgemäßen Vorrichtung gemäß Figur 1 in einem verschwenkten Zustand;
Fig. 4 eine Seitenansicht der Umformeinheit und der Gegenlagereinrichtung der erfindungsgemäßen Vorrichtung gemäß Figur 1 in einem weiteren verschwenkten Zustand;
Fig. 5 eine Seitenansicht der Umformeinheit und der Gegenlagereinrichtung der erfindungsgemäßen Vorrichtung gemäß Figur 1 in einem weiteren verschwenkten Zustand;
Fig. 6 ein erfindungsgemäßes Verfahren anhand von sechs Abbildungen; und
Fig. 7 eine Draufsicht auf eine weitere erfindungsgemäße Vorrichtung mit mehreren Umformeinheiten gemäß Figur 1.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

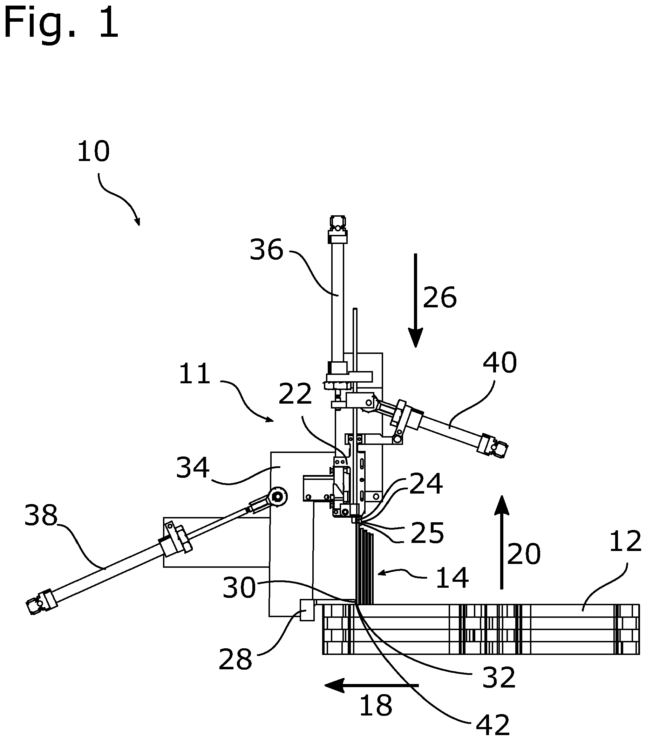

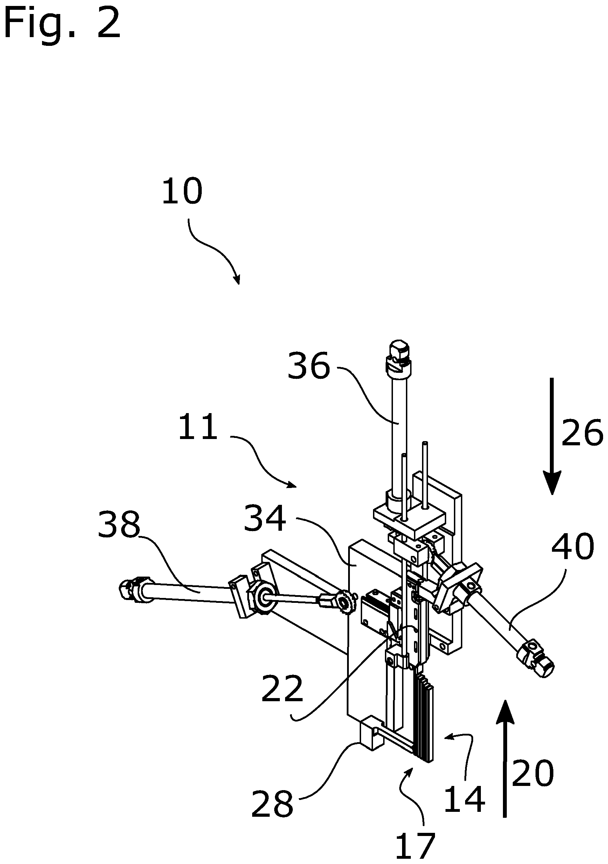

Figur 1 zeigt eine Seitenansicht einer Umformeinheit 11 und einer Gegenlagereinrichtung 28 einer erfindungsgemäßen Vorrichtung 10 in einem Ausgangszustand und Figur 2 zeigt eine perspektivische Ansicht der Umformeinheit 11 und der Gegenlagereinrichtung 28 der erfindungsgemäßen Vorrichtung 10 gemäß Figur 1.

Ein Statorkern 12 und darin angeordnete Leiterstücke 14 sind in Figur 1 teilweise gezeigt. Die Leiterstücke 14 sind in Kreisbahnen 17, die in einer Umfangsrichtung 16 verlaufen, in Reihen 19 angeordnet. Die Reihen 19 erstrecken sich in einer Radialrichtung 18. Die Leiterstücke 14 sind überwiegend sogenannte Hairpins, die zwei länglich erstreckte Schenkel aufweisen, die wiederum über einen Verbindungsabschnitt miteinander verbunden sind. Die Leiterstücke 14 ragen aus dem Statorkern 12 entlang einer Längsrichtung 20 heraus. Es sind in den Figuren jeweils die freien Schenkel der Leiterstücke 14, also die länglich erstreckten dem verbindenden Verbindungsabschnitt abgewandten Enden der Leiterstücke 14, zu sehen. Der Übersichtlichkeit halber ist in den Figuren 1 - 6 jeweils nur eine der Reihen 19 gezeigt.

Die Umformeinheit 11 weist einen Greifer 22 auf, der mindestens zwei Klemmelemente 24 aufweist. In diesem Ausführungsbeispiel sind diese als zwei längliche Klemmbacken 25 ausgeführt, die relativ zueinander bewegbar sind, sodass mittels Klemmen ein Leiterstück 14 gegriffen werden kann. Der Greifer 22 ist entlang einer Greiferlängsrichtung 26 mittels eines Aktuators 36 verfahrbar. In der hier dargestellten Ausgangsposition sind die Greiferlängsrichtung 26 und die Längsrichtung 20 parallel zueinander.

Der Aktuator 36 ist in einen Freigangmodus schaltbar. Ist der Aktuator 36 in den Freigangmodus geschaltet, so kann der Greifer 22 frei entlang der Greiferlängsrichtung 26 bewegt werden. In diesem Modus sind der Greifer 22 und der Aktuator 36 quasi voneinander entkoppelt. Der Aktuator 36 führt lediglich die Bewegung des Greifers 22, er bewirkt sie jedoch nicht und setzt ihr auch keinen Widerstand bzw. nur einen vernachlässigbaren Widerstand entgegen.

In diesem Ausführungsbeispiel sind der Greifer 22 und der Aktuator 36 an einer Halterung 34 angeordnet. Vorliegend ist die Halterung 34 mittels einer ersten Schwenkeinrichtung 38 schwenkbar. Da der Greifer 22 vorliegend an der Halterung 34 angeordnet ist, wird beim Verschwenken der Halterung 34, stets der Greifer 22 mitverschwenkt. Damit wird der Greifer 22 ebenfalls mittels der ersten Schwenkeinrichtung 38 verschwenkt.

Mit einer zweiten Schwenkeinrichtung 40 ist der Greifer 22 gegenüber der Halterung 34 verschwenkbar. Beim Verschwenken des Greifers 22 mit der zweiten Schwenkeinrichtung 40 wird die Relativposition zwischen dem Greifer 22 und der Halterung 34 durch Verschwenken des Greifers 22 verändert. Dazu wird der Aktuator 36 in einen Festmodus geschaltet, so dass die Relativposition des Greifers 22 gegenüber der Halterung 34 entlang der Greiferlängsrichtung 26 fixiert wird.

In diesem Ausführungsbeispiel ist der Aktuator 36 und die beiden Schwenkeinrichtungen 38, 40 im Wesentlichen in derselben Ebene angeordnet. Auch die translatorische und die Schwenkbewegung liegen in dieser Ebene. Dies führt zu einer kompakten und insbesondere schmalen Bauweise der Umformeinheit 11.

Die Vorrichtung 10 umfasst des Weiteren eine Gegenlagereinrichtung 28. Die Gegenlagereinrichtung 28 weist einen Gegenlagerabschnitt 30 auf. Die Gegenlagereinrichtung 28 ist derart bewegbar bzw. in der Vorrichtung 10 angeordnet und gelagert, dass sie mit dem Gegenlagerabschnitt 30 an das in der Radialrichtung 18 erstreckten Reihe 19 von Leiterstücken 14 äußerste Leiterstück 14 anlegbar ist. Durch das Anlegen des Gegenlagerabschnitts 30 an das Leiterstück 14 wird ein erster Biegepunkt 32 definiert. Der erste Biegepunkt 32 ist zugleich ein erster Schwenkpunkt 42 des Greifers 22.

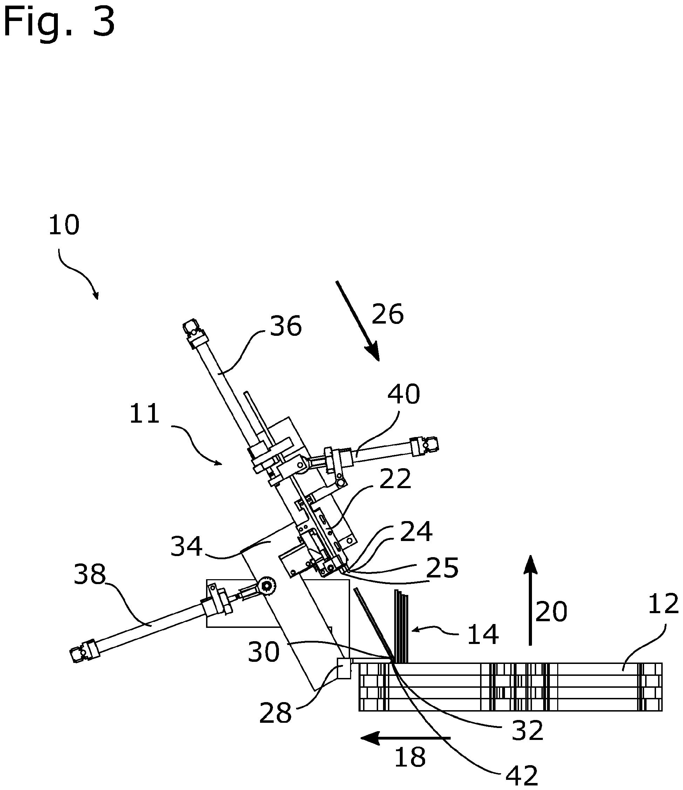

Figur 3 zeigt eine Seitenansicht der Umformeinheit 11 und der Gegenlagereinrichtung 28 der erfindungsgemäßen Vorrichtung 10 gemäß Figur 1 in einem verschwenkten Zustand. Die Halterung 34 wurde mittels der ersten Schwenkeinrichtung 38 geschwenkt (der Linearaktuator der ersten Schwenkeinrichtung 38 wurde eingefahren bzw. verkürzt). Der Greifer 22 wurde, da dieser an der Halterung 34 angeordnet ist, mit verschwenkt, sodass die Greiferlängsrichtung 26 gegenüber der Längsrichtung 20 geneigt ist. Vorliegend ist das radial äußerste Leiterstück 14 bereits um den ersten Biegepunkt 32 gebogen dargestellt.

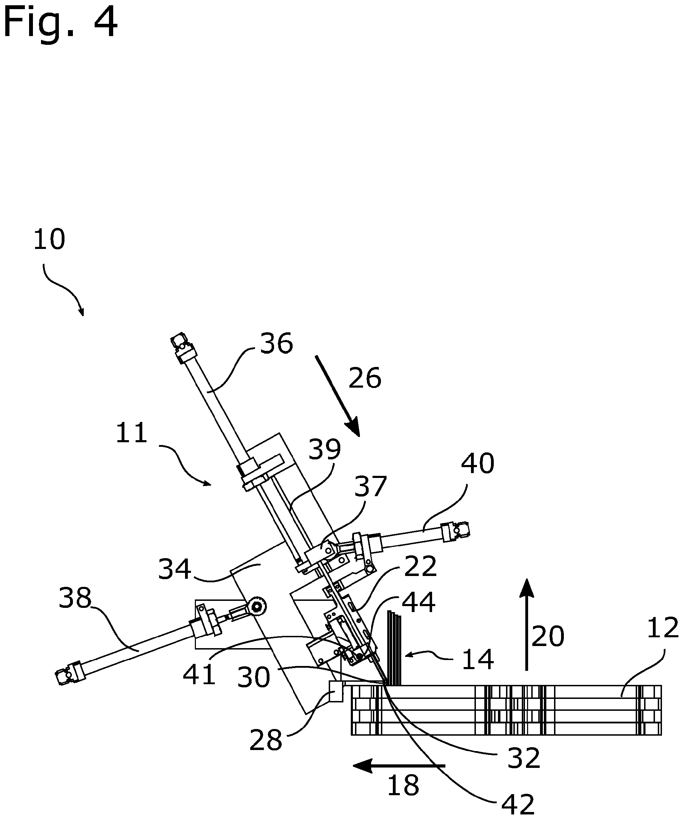

Figur 4 zeigt eine Seitenansicht der Umformeinheit 11 und der Gegenlagereinrichtung 28 der erfindungsgemäßen Vorrichtung 10 gemäß Figur 1 in einem weiteren verschwenkten Zustand. Der Unterschied gegenüber dem in Figur 3 gezeigten Zustand der Vorrichtung 10 ist, dass die Position des Greifers 22 mittels des Aktuators 36 entlang der Greiferlängsrichtung 26 zum ersten Biegepunkt 32 hin verschoben wurde (Der Aktuator 36, der vorliegend als Druckzylinder ausgebildet ist, wurde ausgefahren). In dem dargestellten Ausführungsbeispiel wird mit dem Aktuator 36 neben dem Greifer 22 auch die zweite Schwenkeinrichtung 40 translatorisch parallel zur Greiferlängsrichtung 26 verschoben. Der Aktuator 36 ist mit einem translatorisch bewegbaren Element 37 verbunden, an dem die zweite Schwenkeinrichtung 40 angreift, bzw. deren Druckzylinder schwenkbar angelenkt ist. Dieses Element 37 weist einen Fortsatz 39 auf, der wiederum schwenkbar mit dem Greifer 22 in einem Anlenkpunkt 41 verbunden ist. Dieser Anlenkpunkt 41 des Fortsatzes 39 am Greifer 22 bildet den zweiten Schwenkpunkt 44 des Greifers 22, also den Punkt, um den die zweite Schwenkeinrichtung 40 den Greifer 22 schwenkt. Neben dem translatorisch bewegbaren Element 37 greift die zweite Schwenkeinrichtung 40 auch an dem Greifer 22 an. Der Druckzylinder der zweiten Schwenkeinrichtung 40 ist schwenkbar an dem Greifer 22 angelenkt.

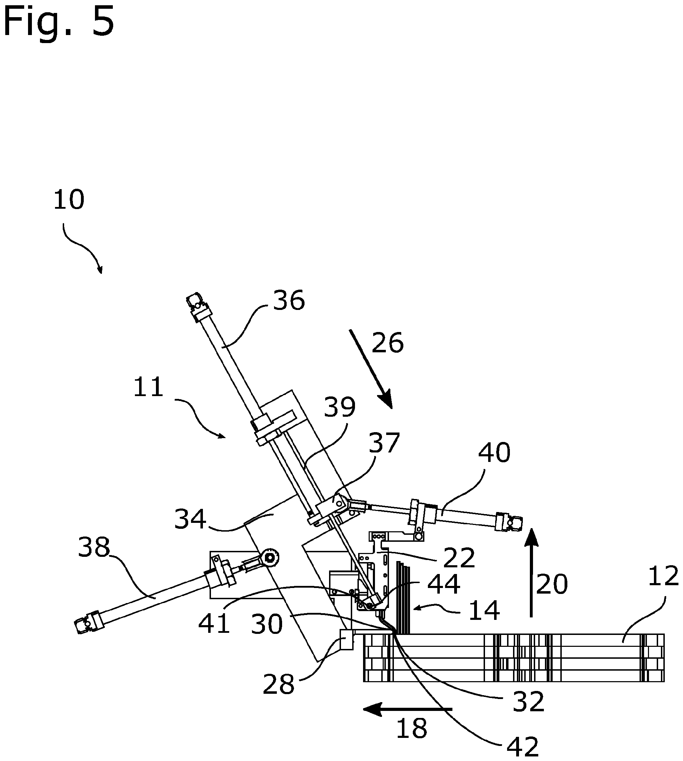

Figur 5 zeigt eine Seitenansicht der Umformeinheit 11 und der Gegenlagereinheit 28 der erfindungsgemäßen Vorrichtung 10 gemäß Figur 1 in einem weiteren verschwenkten Zustand. Der Unterschied gegenüber dem in Figur 4 gezeigten Zustand der Vorrichtung 10 ist, dass der Greifer 22 mittels der zweiten Schwenkeinrichtung 40 verschwenkt wurde. Der relative Abstand zwischen Greifer 22 bzw. des Anlenkpunkts 41 des Aktuators 36 am Greifer 22 und der Halterung 34 bleibt beim Verschwenken mittels der zweiten Schwenkeinrichtung 40 unverändert. Der Greifer 22 wurde durch den Schwenkvorgang nicht translatorisch verschoben, sondern gegenüber der Halterung 34 um den Anlenkpunkt 41 verschwenkt. Vorliegend ist das radial äußerste Leiterstück 14 durch das Verschwenken des Greifers 22 um den zweiten Schwenkpunkt 44 ein zweites Mal gebogen worden.

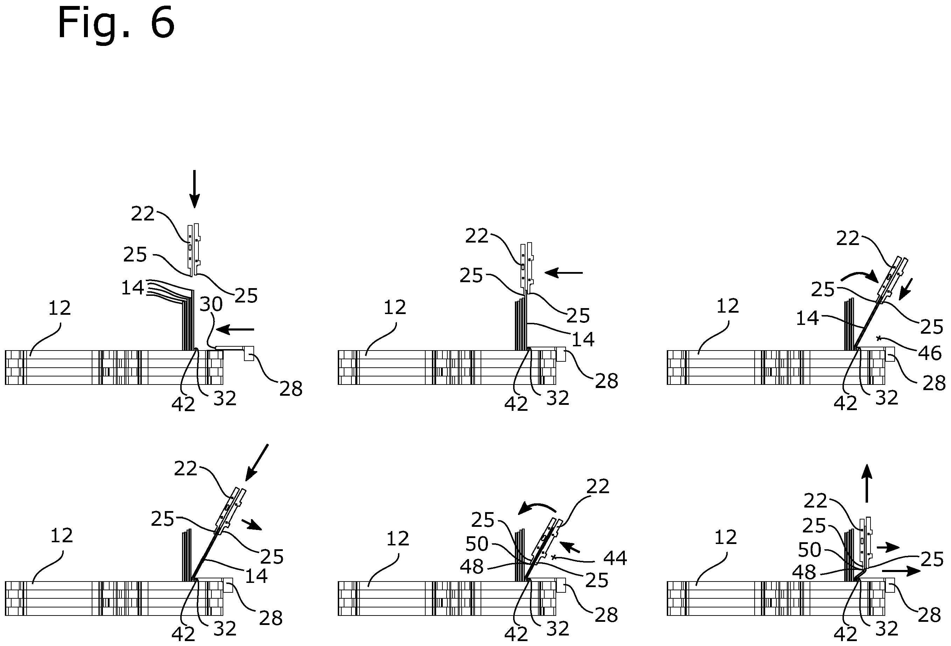

Figur 6 zeigt ein erfindungsgemäßes Verfahren anhand von sechs Abbildungen, die je Verfahrensschritte illustrieren. Bei dem dargestellten Verfahren kann eine Vorrichtung 10 gemäß Figur 1 verwendet werden, um den dargestellten Greifer 22 entsprechend zu bewegen. Zunächst wird der Greifer 22 aus seiner Ausgangsposition entlang der Längsrichtung 20 und die Gegenlagereinrichtung 28 entlang der Radialrichtung 18 in Richtung der Reihe 19 von Leiterstücken 14 bewegt (angedeutet durch jeweils einen Pfeil). Dabei wird die der Reihe 19 von Leiterstücken 14 zugewandte (radial innenliegende) Klemmbacke 25 des Greifers 22, zwischen das radial äußerste Leiterstück 14 und das benachbarte (radial einwärts angeordnete) Leiterstück 14 bewegt, so dass ein Spalt zwischen den beiden Leiterstücken 14 entsteht. Vorliegend ist das radial äußerste Leiterstück 14 so lang, dass die der Reihe 19 von Leiterstücken 14 zugewandte Klemmbacke 25 des Greifers 22 in der gewünschten _(in Abbildung oben Mitte dargestellten) Greifposition das benachbarte (radial einwärts angeordnete) Leiterstück 14 nicht kontaktiert, sodass kein Spalt zwischen den beiden Leiterstücken 14 entsteht. Gleichzeitig wird der Gegenlagerabschnitt 30 an das äußerste Leiterstück 14 angelegt und legt damit den ersten Biegepunkt 32 bzw. den ersten Schwenkpunkt 42 des Greifers 22 (Abbildung oben links) örtlich fest.

Sobald der Greifer 22 sich in der gewünschten Greifposition befindet, wird das Leiterstücks 14 mittels der Klemmbacken 25 klemmend gegriffen (angedeutet durch einen Pfeil). Dazu bewegt sich die der Reihe 19 von Leiterstücken 14 abgewandte Klemmbacke 25 auf die der Reihe 19 von Leiterstücken 14zugewandte Klemmbacke 25, die in ihrer Position bezüglich der Leiterstücke 14 festgehalten wird, zu. (Abbildung oben Mitte). Die Klemmbacken 25 können auch anders aufeinander zu bewegt werden.

Nun wird der Greifer 22 um den ersten Biegepunkt 32 bzw. um den ersten Schwenkpunkt 42 geschwenkt. Dies geschieht, indem die Halterung 34 mittels der ersten Schwenkeinrichtung 38 um einen Schwenkpunkt 46 der Halterung 36 geschwenkt wird (angedeutete durch einen gebogenen Pfeil). Dieser Schwenkpunkt 46 der Halterung liegt radial außerhalb der Reihe 19 von Leiterstücken 14und ist somit von dem ersten Schwenkpunkt 42 des Greifers 22 beabstandet. Der Schwenkpunkt 46 der Halterung 34 ist vorliegend mit einem Kreuz angedeutet. Der Aktuator 36 ist bei diesem Schwenkvorgang in den Freigangmodus geschaltet, so dass sich der Greifer 22 frei entlang der Greiferlängsrichtung 26 bewegen kann. Da der Greifer 22 an der Halterung 34 angeordnet ist, wird beim Verschwenken der Halterung 34 der Greifer 22 ebenfalls verschwenkt. Der Greifer 22 hat aufgrund der Klemmung eine feste Verbindung mit dem Leiterstück 14 und daher auch einen festen Abstand zum ersten Biegepunkt 32. Beim Verschwenken verschiebt sich der Greifer 22 aufgrund des festen Abstands (da das Leiterstück klemmend gegriffen ist und zwar gebogen jedoch nicht "langgezogen" wird) zum ersten Biegepunkt 32 hin (angedeutet durch einen kurzen Pfeil in Richtung des ersten Biegepunktes 32). Damit ergibt sich der erste Schwenkpunkt 42 des Greifers 22, der mit dem ersten Biegepunkt 32 identisch ist (Abbildung oben rechts). Es ergibt sich eine erste Biegung. Die Schwenkbewegung des Greifers 22 ergibt sich also aus einer Überlagerung von der Schwenkbewegung der Halterung 34 um den Schwenkpunkt 46 und der translatorischen Bewegung des Greifers 22 entlang der Längsrichtung 26 in Richtung des ersten Biegepunktes 32. Der erste Schwenkpunkt 42 des Greifers 22 ist somit von dem Schwenkpunkt 46 der Halterung 34 verschieden bzw. beabstandet.

Nach dem ersten Biegen wird der Griff des Greifers 22 gelöst, in dem die Klemmbacken 25 auseinandergefahren werden (angedeutet durch einen kurzen Pfeil). Dies geschieht, indem die der Reihe 19 von Leiterstücken 14abgewandte Klemmbacke 25 von der der Reihe 19 von Leiterstücken 14zugewandten Klemmbacke 25, die in ihrer Position bezüglich der Reihe 19 von Leiterstücken 14 festgehalten wird, wegbewegt wird. Anschließend wird der Greifer 22 entlang des nun schräg abstehenden Leiterstückabschnitts bzw. entlang der Greiferlängsrichtung 26 in Richtung des ersten Biegepunktes 32 (angedeutet durch einen langen Pfeil) verfahren (Abbildung unten links).

Sobald die gewünschte Position erreicht ist, greift der Greifer 22 mittels Klemmen erneut das Leiterstück 14 (angedeutet durch einen geraden Pfeil). Auch dieses Greifen geschieht, wie oben beschrieben, durch Bewegen der der Reihe 19 von Leiterstücken 14 abgewandten Klemmbacke 25. Der Greifer 22 wird um einen zweiten Schwenkpunkt 44 geschwenkt (angedeutet durch einen gebogenen Pfeil). Dabei wird ein zweiter Biegepunkt 48 durch eine Kante 50 der der Reihe 19 von Leiterstücken 14 zugewandten Klemmbacke 25 des Greifers 22 definiert. Der zweite Schwenkpunkt 44 des Greifers 22 und der zweite Biegepunkt 48 liegen dabei beabstandet voneinander. Der zweite Schwenkpunkt 44 des Greifers 22 ist vorliegend mit einem Kreuz angedeutet. Durch das Verschwenken des Greifers 22 um den zweiten Schwenkpunkt 44 einerseits und bedingt durch einen festen Abstand zwischen dem ersten Biegepunkt 32 und dem zweiten Biegepunkt 48, durch den festen Griff des Leiterstücks 14 mittels des Greifers 22, ergibt sich während des zweiten Verschwenkens des Greifers 22 eine Bewegung, die den zweiten Biegepunkt 48 in Richtung des Stators 12 hin und radial nach außen (Abbildung unten Mitte) verschiebt. Der zweite Schwenkpunkt 44 des Greifers 22 ist zum Leiterstück 14 beabstandet angeordnet.

Insbesondere durch die Bewegung des zweiten Biegepunktes 48 in Richtung des Stators 12 hin, wird das Leiterstück 14 am ersten Biegepunkt 32 noch weiter gebogen, da der Gegenlagerabschnitt 30 immer noch am Leiterstück 14 anliegt und damit das Leiterstück am ersten Biegepunkt 32 fixiert. Ein solches Weiterbiegen am ersten Biegepunkt 32 muss im Gesamtbiegeprozess berücksichtigt werden. Während den Biegeprozessen kann ein Rückfedern des Leiterstückmaterials berücksichtigt werden, d.h. es wird etwas weiter als in die tatsächlich gewünschte Endstellung gebogen. Sodass, wenn der gesamte Vorgang beendet ist, der klemmende Griff am Leiterstück 14 gelöst werden kann und das Leiterstück 14 etwas zurück federt, wodurch es schlussendlich in die tatsächlich gewünschte Biegeposition gelangt. D. h. es wird bspw. um einen größeren Winkel gebogen als gewünscht. Damit kann quasi ein Rückfedern vorab kompensiert werden. Ein solches Überbiegen kann natürlich auch beim zweiten Biegepunkt 48 berücksichtigt werden, indem der Greifer 22 beim zweiten Verschwenken um einen größeren Winkel geschwenkt wird als gewünscht.

Nach dem zweiten Biegen wird der klemmende Griff des Greifers 22 wieder gelöst, in dem die Klemmbacken 25 wie oben beschrieben wieder auseinandergefahren werden (angedeutet in der Abbildung durch einen kurzen Pfeil nach rechts). Der Greifer 22 wird entlang der Längsrichtung 20 vom Leiterstück 14 wegbewegt (angedeutet in der Abbildung durch einen langen Pfeil nach oben). Dies kann ebenso durch ein zumindest teilweises Verfahren des Stators 12 nebst Leiterstücken 14 entlang der Längsrichtung 20 realisiert werden. Die Gegenlagereinrichtung 28 wird ebenfalls vom Leiterstück 14 wegbewegt (angedeutet in der Abbildung durch einen langen Pfeil nach rechts).

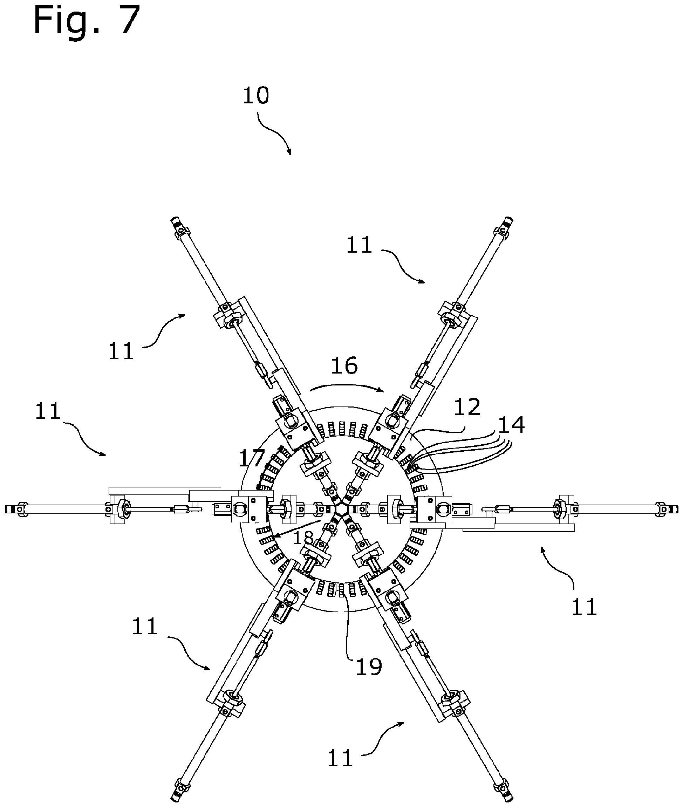

Figur 7 zeigt eine Draufsicht auf eine weitere erfindungsgemäße Vorrichtungen 10 mit mehreren Umformeinheiten 11 gemäß Figur 1. Aufgrund der schmalen Bauweise der Umformeinheiten 11 kann eine Vielzahl der Umformeinheiten 11 radial um den Statorkern 12 angeordnet werden. In Figur 7 ist eine Anordnung mit sechs Umformeinheiten 11 gezeigt. Damit ist ein gleichzeitiges Aufweiten von sechs Leiterstücken 14 möglich. Vorliegend sind die Leiterstücke 14 auf mehreren in der Umfangsrichtung 16 verlaufenden Kreisbahnen 17 in Reihen 19, die in der Radialrichtung 18 erstreckt sind, angeordnet. Figur 7 zeigt den Zustand der Vorrichtung 10 nach dem Twisten. Hier wurden also die Leiterstücke 14 bereits aufgeweitet. Abhängig von den Begebenheiten kann der verfügbare Bauraum somit optimal genutzt werden. Der Platz zwischen den gezeigten Umformeinheiten 11 kann beispielsweise durch ein Anordnen von weiteren Maschinen und/oder Werkzeugen genutzt werden.

Es ist ebenso denkbar die Umformeinheiten 11 derart anzuordnen, dass das in einer Reihe 19 von Leiterstücken 14innerste Leiterstück 14 in radialer Richtung einwärts aufgeweitet wird. Auch hier können mehrere Umformeinheiten 11 radial um den Statorkern 12 aufgrund ihrer kompakten und insbesondere schmalen Bauweise platzsparend angeordnet werden.

## Patentansprüche

1. Vorrichtung (10) zum Umformen eines oder mehrerer in einem Statorkern (12) angeordneten Leiterstücks (14), wobei das Leiterstück (14) vorzugsweise ein Hairpin mit zwei länglich erstreckten Schenkeln und einem diese beiden Schenkel verbindenden Verbindungsabschnitt ist,
wobei in dem Statorkern (12) eine Vielzahl an Leiterstücken (14) angeordnet ist, die auf mehreren in einer Umfangsrichtung (16) verlaufenden Kreisbahnen (17) in Reihen (19), die in einer Radialrichtung (18) erstreckt sind, angeordnet sind,
wobei die Umformung in einem aus dem Statorkern (12) herausragenden freien Ende des Leiterstücks (14) erfolgt,
wobei die Vorrichtung (10) umfasst:
eine Aufnahme für den Statorkern (12) in einer vorgesehenen Bearbeitungsposition in der die umzuformenden Leiterstücke (14) in einer Ausgangskonfiguration (vor dem Umformen) derart angeordnet sind, dass die aus dem Statorkern (12) herausragenden Leiterstücke (14) entlang einer Längsrichtung (20) erstreckt aus dem Statorkern (12) ragen,
eine Umformeinheit (11), die einen Greifer (22) umfasst, der ausgebildet ist, um das umzuformende Leiterstück (14) lösbar klemmend zwischen mindestens zwei Klemmelementen (24) zu fassen,
**dadurch gekennzeichnet, dass**
der Greifer (22) in der Vorrichtung (10) entlang einer Greiferlängsrichtung (26) verfahrbar ist, die in einem Ausgangszustand des Greifers (22) parallel zur Längsrichtung (20) verläuft, und wobei der Greifer (22) weiter in einer durch die Längsrichtung (20) und die Radialrichtung (18) aufgespannten Ebene derart in der Vorrichtung (10) schwenkbar ist, dass die Greiferlängsrichtung (26) im verschwenkten Zustand gegenüber der Längsrichtung (20) geneigt ist, wobei
die Vorrichtung (10) insbesondere eine Gegenlagereinrichtung (28) umfasst, die derart beweglich angeordnet ist, dass ein Gegenlagerabschnitt (30) an das Leiterstück (14) anlegbar ist, um einen ersten Biegepunkt (32) zu definieren.

2. Vorrichtung (10) nach Anspruch 1, **dadurch gekennzeichnet, dass** die Umformeinheit (11) einen Aktuator (36), insbesondere in Form eines Druck-, Hydraulik- oder Pneumatikzylinders, umfasst und der Greifer (22) mittels des Aktuators (36) entlang der Greiferlängsrichtung (26) translatorisch bewegbar ist, wobei der Aktuator (36) in einen Freigangsmodus schaltbar ist, in dem der Greifer (22) frei entlang der Greiferlängsrichtung (26) translatorisch bewegbar ist.

3. Vorrichtung (10) nach einem der vorhergehenden Ansprüche, **dadurch gekennzeichnet, dass** die Umformeinheit (11) eine erste Schwenkeinrichtung (38) umfasst, die angeordnet und ausgebildet ist, um den Greifer (22) auf einer Kreisbahn um einen ersten Schwenkpunkt (42) zu schwenken und
eine zweite Schwenkeinrichtung (40) umfasst, die angeordnet und ausgebildet ist, um den Greifer (22) auf einer Kreisbahn um einen zweiten Schwenkpunkt (44) zu schwenken.

4. Vorrichtung (10) nach Anspruch 2 und 3, **dadurch gekennzeichnet, dass** der Aktuator (36) und die erste Schwenkeinrichtung (38) und/oder die zweite Schwenkeinrichtung (40) im Wesentlichen in einer Ebene angeordnet sind.

5. Vorrichtung (10) nach einem der vorhergehenden Ansprüche, **dadurch gekennzeichnet, dass** die Klemmelemente (24) in einer zur Greiferlängsrichtung (26) orthogonalen Klemmrichtung zur Durchführung des Klemmvorgangs zueinander bewegbar sind.

6. Vorrichtung (10) nach einem der vorhergehenden Ansprüche, **dadurch gekennzeichnet, dass** die Klemmelemente (24) länglich entlang der Greiferlängsrichtung (26) erstreckte Klemmbacken (25) sind.

7. Vorrichtung (10) nach einem der vorhergehenden Ansprüche **dadurch gekennzeichnet, dass** der Gegenlagerabschnitt (30) durch eine radial einwärts gerichtete Bewegung der Gegenlagereinrichtung (28) an das Leiterstück (14) anlegbar ist.

8. Vorrichtung (10) nach einem der vorhergehenden Ansprüche, **dadurch gekennzeichnet, dass** der Gegenlagerabschnitt (30) derart angeordnet ist, dass er in einem unmittelbar an den Statorkern (12) angrenzenden Bereich des Leiterstücks (14) an dieses anlegbar ist, insbesondere wobei die Gegenlagereinrichtung (28) den Statorkern (12) von radial außen und/oder in Längsrichtung (20) auf Seiten der herausragenden Leiterstücke (14) kontaktiert, wenn der Gegenlagerabschnitt (30) am Leiterstück (14) anliegt.

9. Vorrichtung (10) nach einem der vorhergehenden Ansprüche, **dadurch gekennzeichnet, dass** der Gegenlagerabschnitt (30) zumindest teilweise eine abgerundete Form aufweist.

10. Verfahren zum Umformen eines oder mehrerer in einem Statorkern (12) angeordneten Leiterstücks (14), wobei das Leiterstück (14) vorzugsweise ein Hairpin mit zwei länglich erstreckten Schenkeln und einem diese beiden Schenkel verbindenden Verbindungsabschnitt ist,
wobei in dem Statorkern (12) eine Vielzahl an Leiterstücken (14) angeordnet ist, die auf mehreren in einer Umfangsrichtung (16) verlaufenden Kreisbahnen (17) in Reihen (19), die in einer Radialrichtung (18) erstreckt sind, angeordnet sind,
wobei die Leiterstücke (14) in einer Ausgangskonfiguration (vor dem Umformen) derart angeordnet sind, dass die aus dem Statorkern (12) herausragenden Leiterstücke (14) entlang einer Längsrichtung (20) erstreckt aus dem Statorkern (12) ragen,
wobei die Umformung in einem aus dem Statorkern (12) herausragenden freien Ende des Leiterstücks (14) erfolgt,
wobei das Verfahren die folgenden Schritte umfasst:
Bewegen eines Greifers (22) entlang einer Längsrichtung (20) in eine Greifposition und klemmendes Greifen des umzuformenden Leiterstücks (14) mittels des Greifers (22);
Insbesondere Anlegen eines Gegenlagerabschnitts (30) an das Leiterstück (14), um einen ersten Biegepunkt (32) zu definieren;
Verschwenken des Greifers (22) auf einer Kreisbahn um einen ersten Schwenkpunkt (42), der dem ersten Biegepunkt (32) entspricht und in dem Leiterstück (14) oder unmittelbar an dem Leiterstück (14) liegt, um eine erste Biegung des Leiterstücks (14) zu bewirken , insbesondere wobei die Verschwenkbewegung des Greifers (22) auf der Kreisbahn durch ein Verschwenken einer Halterung (34) des Greifers (22) um einen Schwenkpunkt (46), der außerhalb des Leiterstücks (14) liegt, erfolgt, wobei diesem Verschwenken der Halterung (34) eine translatorische Bewegung des Greifers (22) gegenüber der Halterung (34) überlagert ist, die durch den Griff des Leiterstücks (14) sowie eine freie translatorische Beweglichkeit des Greifers (22) gegenüber der Halterung (34) während deren Verschwenken bewirkt wird;
insbesondere Lösen des klemmenden Griffs des Greifers (22) und Bewegen des Greifers (22) entlang der Erstreckung des Leiterstücks (14) und erneutes Greifen des Leiterstücks (14);
Verschwenken des Greifers (22) um einen zweiten Schwenkpunkt (44), der beabstandet zu dem Leiterstück (14) angeordnet ist, um eine zweite Biegung des Leiterstücks (14) um einen zweiten Biegepunkt (48) zu bewirken, wobei eine Kante (50) des Greifers (22) den zweiten Biegepunkt (48) definiert, insbesondere wobei während diesem Verschwenkvorgang die Relativposition sich durch ein Verschwenken des Greifers (22) gegenüber der Halterung (34) verändert.

11. Verfahren nach Anspruch 10, **dadurch gekennzeichnet, dass** beim Verschwenken um den zweiten Schwenkpunkt (44) des Greifers (22) der zweite Biegepunkt (48) relativ zum Statorkern (12) bewegt wird, insbesondere radial auswärts und entlang der Längsrichtung (20) zum Statorkern (12) hin.

12. Verfahren nach Anspruch 10 oder Anspruch 11, **dadurch gekennzeichnet, dass** das umgeformte Leiterstück (14) das radial äußerste der Leiterstücke (14) einer in Radialrichtung (18) erstreckten Reihe (19) von Leiterstücken (14) ist.

13. Verfahren nach einem der Ansprüche 10 bis 12, **dadurch gekennzeichnet, dass** der erste Biegepunkt (32), der zweite Biegepunkt (48) und der zweite Schwenkpunkt (44) des Greifers (22) in einer Ebene liegen, die durch die Längsrichtung (20) und Radialrichtung (18) aufgespannt wird.

14. Verfahren nach einem der Ansprüche 10 bis 13, **dadurch gekennzeichnet, dass** die erste und die zweite Biegung in einer Ebene verlaufen.

15. Verfahren nach einem der Ansprüche 10 bis 14, **dadurch gekennzeichnet, dass** am ersten Biegepunkt (32) und/oder am zweiten Biegepunkt (48) um einen größeren Winkel gebogen wird, als gewünscht, so dass ein Rückfedern des Leiterstücks (14) zumindest teilweise ausgeglichen wird.

## Claims

1. Apparatus (10) for shaping one or more conductor pieces (14) arranged in a stator core (12), the conductor piece (14) preferably being a hairpin having two elongate legs and a connection portion connecting these two legs,
a plurality of conductor pieces (14) being arranged in the stator core (12), which conductor pieces are arranged on a plurality of circular paths (17) extending in a circumferential direction (16), in rows (19) extending in a radial direction (18),
the shaping taking place at a free end of the conductor piece (14) that projects from the stator core (12),
the apparatus (10) comprising:
a receptacle for the stator core (12) in a provided operating position in which the conductor pieces (14) to be shaped are arranged in an initial configuration (before shaping) in such a way that the conductor pieces (14) projecting from the stator core (12) project from the stator core (12) extending in a longitudinal direction (20),
a forming unit (11) having a gripper (22) which is designed to releasably clamp the conductor piece (14) to be shaped between at least two clamping elements (24),
**characterized in that**
the gripper (22) can be moved in the apparatus (10) in a gripper longitudinal direction (26) which, in an initial state of the gripper (22), extends in parallel with the longitudinal direction (20), and the gripper (22) can be further pivoted in the apparatus (10) in a plane spanned by the longitudinal direction (20) and the radial direction (18) such that the gripper longitudinal direction (26) is inclined relative to the longitudinal direction (20) in the pivoted state,
the apparatus (10) in particular comprising a counter-bearing device (28) which is movably arranged in such a way that a counter-bearing portion (30) can be placed against the conductor piece (14) in order to define a first bending point (32).

2. Apparatus (10) according to claim 1, **characterized in that** the shaping unit (11) comprises an actuator (36), in particular in the form of a pressure, hydraulic or pneumatic cylinder, and the gripper (22) is translationally movable in the gripper longitudinal direction (26) by means of the actuator (36), it being possible for the actuator (36) to be switched into a release mode in which the gripper (22) is freely translationally movable in the gripper longitudinal direction (26).

3. Apparatus (10) according to either of the preceding claims,
**characterized in that** the shaping unit (11) comprises a first pivoting device (38), which is arranged and designed to move the gripper (22) on a circular path about a first pivot point (42), and a second pivoting device (40), which is arranged and designed to pivot the gripper (22) on a circular path about a second pivot point (44).

4. Apparatus (10) according to claim 2 and claim 3, **characterized in that** the actuator (36) and the first pivoting device (38) and/or the second pivoting device (40) are arranged substantially in one plane.

5. Apparatus (10) according to any of the preceding claims,
**characterized in that** the clamping elements (24) are movable relative to one another in a clamping direction orthogonal to the gripper longitudinal direction (26) in order to carry out the clamping process.

6. Apparatus (10) according to any of the preceding claims,
**characterized in that** the clamping elements (24) are clamping jaws (25) which extend longitudinally in the gripper longitudinal direction (26).

7. Apparatus (10) according to any of the preceding claims,
**characterized in that** the counter-bearing portion (30) can be placed against the conductor piece (14) by a radially inward movement of the counter-bearing device (28).

8. Apparatus (10) according to any of the preceding claims,
**characterized in that** the counter-bearing portion (30) is arranged such that, in a region of the conductor piece (14) that is directly adjacent to the stator core (12), said portion can be placed against said conductor piece, the counter-bearing device (28) in particular contacting the stator core (12) from radially outside and/or in the longitudinal direction (20) on the sides of the projecting conductor pieces (14) when the counter-bearing portion (30) is placed against the conductor piece (14).

9. Apparatus (10) according to any of the preceding claims,
**characterized in that** the counter-bearing portion (30) has a rounded shape at least in part.

10. Method for shaping one or more conductor pieces (14) arranged in a stator core (12), wherein the conductor piece (14) is preferably a hairpin having two elongate legs and a connection portion connecting these two legs,
wherein a plurality of conductor pieces (14) are arranged in the stator core (12), which conductor pieces are arranged on a plurality of circular paths (17) extending in a circumferential direction (16), in rows (19) extending in a radial direction (18),
wherein the conductor pieces (14) are arranged in an initial configuration (before shaping) in such a way that the conductor pieces (14) projecting from the stator core (12) project from the stator core (12) extending in a longitudinal direction (20),
wherein the shaping takes place at a free end of the conductor piece (14) that projects from the stator core (12),
wherein the method comprises the following steps:
moving a gripper (22) in a longitudinal direction (20) into a gripping position and gripping the conductor piece (14) to be shaped in a clamping manner by means of the gripper (22);
in particular placing a counter-bearing portion (30) against the conductor piece (14) in order to define a first bending point (32);
pivoting the gripper (22) on a circular path about a first pivot point (42) which corresponds to the first bending point (32) and lies in the conductor piece (14) or directly on the conductor piece (14) in order to bring about a first bend in the conductor piece (14), in particular wherein the pivoting movement of the gripper (22) on the circular path takes place by pivoting a holder (34) of the gripper (22) about a pivot point (46) which lies outside the conductor piece (14), wherein this pivoting of the holder (34) is superimposed by a translational movement of the gripper (22) relative to the holder (34), which is brought about by the grip on the conductor piece (14) and a free translational movability of the gripper (22) relative to the holder (34) during the pivoting thereof;
in particular releasing the clamping grip of the gripper (22) and moving the gripper (22) along the extension of the conductor piece (14) and gripping the conductor piece (14) again;
pivoting the gripper (22) about a second pivot point (44) which is arranged at a distance from the conductor piece (14) in order to effect a second bend of the conductor piece (14) about a second bending point (48), wherein an edge (50) of the gripper (22) defines the second bending point (48), in particular wherein, during this pivoting process, the relative position changes due to pivoting of the gripper (22) relative to the holder (34).

11. Method according to claim 10, **characterized in that** during the pivoting about the second pivot point (44) of the gripper (22), the second bending point (48) is moved relative to the stator core (12), in particular radially outward and in the longitudinal direction (20) toward the stator core (12).

12. Method according to claim 10 or claim 11, **characterized in that** the shaped conductor piece (14) is the radially outermost of the conductor pieces (14) in a row (19) of conductor pieces (14) extending in the radial direction (18).

13. Method according to any of claims 10 to 12, **characterized in that** the first bending point (32), the second bending point (48) and the second pivot point (44) of the gripper (22) lie in a plane which is spanned by the longitudinal direction (20) and radial direction (18).

14. Method according to any of claims 10 to 13, **characterized in that** the first and the second bend extend in one plane.

15. Method according to any of claims 10 to 14, **characterized in that** the bending at the first bending point (32) and/or at the second bending point (48) is carried out by a greater angle than desired, such that springback of the conductor piece (14) is at least partially compensated for.

## Revendications

1. Dispositif (10) pour former une ou plusieurs pièces conductrices (14) disposées dans un noyau statorique (12), dans lequel la pièce conductrice (14) est de préférence une épingle à chevaux avec deux branches s'étendant longitudinalement et une section de liaison reliant ces deux branches,
dans lequel une pluralité de pièces conductrices (14) est disposée dans le noyau statorique (12), qui sont disposées sur plusieurs trajectoires circulaires (17) s'étendant dans une direction périphérique (16) en rangées (19), qui s'étendent dans une direction radiale (18),
dans lequel le formage est effectué dans une extrémité libre de la pièce conductrice (14) dépassant du noyau statorique (12),
dans lequel le dispositif (10) comprend :
un logement pour le noyau statorique (12) dans une position d'usinage prévue dans laquelle les pièces conductrices (14) à former sont disposées dans une configuration initiale (avant le formage), de telle sorte que les pièces conductrices (14) dépassant du noyau statorique (12) dépassent du noyau statorique (12) de manière étendue le long d'une direction longitudinale (20),
une unité de formage (11) qui comprend une pince (22) qui est réalisée pour saisir la pièce conductrice (14) à former en le serrant de manière amovible entre au moins deux éléments de serrage (24),
**caractérisé en ce que**
la pince (22) peut être déplacée dans le dispositif (10) le long d'une direction longitudinale de pince (26) qui, dans un état initial de la pince (22), s'étend parallèlement à la direction longitudinale (20), et dans lequel la pince (22) peut en outre pivoter dans le dispositif (10) dans un plan tendu par la direction longitudinale (20) et la direction radiale (18), de telle sorte que la direction longitudinale de pince (26) est inclinée par rapport à la direction longitudinale (20) dans l'état pivoté, où
le dispositif (10) comprend en particulier un système de contre-appui (28), qui est disposé de manière mobile de telle sorte qu'une section de contre-appui (30) puisse être appliquée contre la pièce conductrice (14) pour définir un premier point de flexion (32).

2. Dispositif (10) selon la revendication 1, **caractérisé en ce que** l'unité de formage (11) comprend un actionneur (36), en particulier sous la forme d'un vérin à pression, hydraulique ou pneumatique, et la pince (22) peut être déplacée en translation le long de la direction longitudinale de pince (26) au moyen de l'actionneur (36), dans lequel l'actionneur (36) peut être commuté dans un mode de libération dans lequel la pince (22) peut être déplacée librement en translation le long de la direction longitudinale de pince (26).

3. Dispositif (10) selon l'une quelconque des revendications précédentes, **caractérisé en ce que** l'unité de formage (11) comprend un premier système de pivotement (38), qui est agencé et réalisé pour faire pivoter la pince (22) sur une trajectoire circulaire autour d'un premier point de pivotement (42) et un deuxième système de pivotement (40), qui est disposé et réalisé pour faire pivoter la pince (22) sur une trajectoire circulaire autour d'un deuxième point de pivotement (44).

4. Dispositif (10) selon la revendication 2 et 3, **caractérisé en ce que** l'actionneur (36) et le premier système de pivotement (38) et/ou le deuxième système de pivotement (40) sont disposés sensiblement dans un plan.

5. Dispositif (10) selon l'une quelconque des revendications précédentes, **caractérisé en ce que** les éléments de serrage (24) sont mobiles l'un par rapport à l'autre dans une direction de serrage orthogonale à la direction longitudinale de pince (26) pour réaliser l'opération de serrage.

6. Dispositif (10) selon l'une quelconque des revendications précédentes, **caractérisé en ce que** les éléments de serrage (24) sont des mâchoires de serrage (25) étendues longitudinalement le long de la direction longitudinale de pince (26).

7. Dispositif (10) selon l'une quelconque des revendications précédentes, **caractérisé en ce que** la section de contre-appui (30) peut être appliquée contre la pièce conductrice (14) par un mouvement du système de contre-appui (28) dirigé radialement vers l'intérieur.

8. Dispositif (10) selon l'une quelconque des revendications précédentes, **caractérisé en ce que** la section de contre-appui (30) est disposée de telle sorte qu'elle peut être appliquée dans une zone de la pièce conductrice (14) directement adjacente au noyau statorique (12) contre celle-ci, en particulier dans lequel le système de contre-appui (28) est en contact avec le noyau statorique (12) radialement depuis l'extérieur et/ou dans la direction longitudinale (20) sur les côtés des pièces conductrices (14) qui dépassent, lorsque la section de contre-appui (30) s'applique contre la pièce conductrice (14).

9. Dispositif (10) selon l'une quelconque des revendications précédentes, **caractérisé en ce que** la section de contre-appui (30) présente au moins en partie une forme arrondie.

10. Procédé de formage d'une ou plusieurs pièces conductrices (14) disposées dans un noyau statorique (12), dans lequel la pièce conductrice (14) est de préférence une épingle à cheveux avec deux branches s'étendant longitudinalement et une section de liaison reliant ces deux branches,
dans lequel une pluralité de pièces conductrices (14) est disposée dans le noyau statorique (12), qui sont disposées sur plusieurs trajectoires circulaires (17) s'étendant dans une direction périphérique (16) en rangées (19), qui s'étendent dans une direction radiale (18),
dans lequel les pièces conductrices (14) sont disposées dans une configuration initiale (avant le formage), de telle sorte que les pièces conductrices (14) dépassant du noyau statorique (12) dépassent du noyau statorique (12) de manière étendue le long d'une direction longitudinale (20),
dans lequel le formage est effectué dans une extrémité libre de la pièce conductrice (14) dépassant du noyau statorique (12),
dans lequel le procédé comprend les étapes suivantes :
le déplacement d'une pince (22) le long d'une direction longitudinale (20) dans une position de préhension et la préhension par serrage de la pièce conductrice (14) à former au moyen de la pince (22) ;
en particulier, le placement d'une section de contre-appui (30) sur la pièce conductrice (14) pour définir un premier point de flexion (32) ;
le pivotement de la pince (22) sur une trajectoire circulaire autour d'un premier point de pivotement (42) qui correspond au premier point de flexion (32) et se situe dans la pièce conductrice (14) ou directement sur la pièce conductrice (14), afin de provoquer une première flexion de la pièce conductrice (14), en particulier dans lequel le mouvement de pivotement de la pince (22) sur la trajectoire circulaire est effectué par un pivotement d'un support (34) de la pince (22) autour d'un point de pivotement (46), qui se situe à l'extérieur de la pièce conductrice (14), dans lequel un mouvement de translation de la pince (22) par rapport au support (34) est superposé à ce pivotement du support (34), qui est provoqué par la prise de la pièce conductrice (14) ainsi qu'une mobilité de translation libre de la pince (22) par rapport au support (34) pendant son pivotement ;
en particulier le desserrage de la prise par serrage de la pince (22) et le déplacement de la pince (22) le long de l'extension du morceau d'échelle (14) et à nouveau la préhension de la pièce conductrice (14) ;
le pivotement de la pince (22) autour d'un deuxième point de pivotement (44), qui est disposé à distance de la pièce conductrice (14), afin de provoquer une deuxième flexion de la pièce conductrice (14) autour d'un deuxième point de flexion (48), dans lequel un bord (50) de la pince (22) définit le deuxième point de flexion (48), en particulier dans lequel, pendant cette opération de pivotement, la position relative varie du fait d'un pivotement de la pince (22) par rapport au support (34).

11. Procédé selon la revendication 10, **caractérisé en ce que**, lors du pivotement autour du deuxième point de pivotement (44) de la pince (22), le deuxième point de flexion (48) est déplacé par rapport au noyau statorique (12), en particulier radialement vers l'extérieur et le long de la direction longitudinale (20) vers le noyau statorique (12).

12. Procédé selon la revendication 10 ou la revendication 11, **caractérisé en ce que** la pièce conductrice (14) formée est la pièce conductrice (14) radialement le plus extérieur d'une rangée (19) de pièces conductrices (14) s'étendant dans la direction radiale (18).

13. Procédé selon l'une quelconque des revendications 10 à 12, **caractérisé en ce que** le premier point de flexion (32), le deuxième point de flexion (48) et le deuxième point de pivotement (44) de la pince (22) se situent dans un plan qui est tendu par la direction longitudinale (20) et la direction radiale (18).

14. Procédé selon l'une quelconque des revendications 10 à 13, **caractérisé en ce que** la première et la deuxième flexion passent dans un plan.

15. Procédé selon l'une quelconque des revendications 10 à 14, **caractérisé en ce qu'**au premier point de flexion (32) et/ou au deuxième point de flexion (48), on fléchit selon un angle plus grand que souhaité, de sorte qu'un retour élastique de la pièce conductrice (14) est au moins partiellement compensé.
